# EUROPEAN PATENT SPECIFICATION

(11) **EP 3 850 026 B1**
(45) Date of publication and mention of the grant of the patent: **13.11.2024**
(21) Application number: 19858720.6
(22) Date of filing: 06.04.2019
(51) Int. Cl.: A47C 27/14, C08G 18/20, C08G 18/24, C08G 18/48, C08G 18/63, A47C 31/00, C08G 18/76, C08G 18/32, C08G 18/65, C08G 18/66, A47C 27/00, C08G 101/00

(54) **METHODS FOR PRODUCING CONTINUOUS SLABSTOCK FLEXIBLE POLYURETHANE FOAM INCLUDING MAGNETITE PARTICLES AS A STRESS AND PAIN REDUCING MATERIAL**
VERFAHREN ZUR HERSTELLUNG EINES KONTINUIERLICHEN FLEXIBLEN BLOCKSCHAUM-POLYURETHANSCHAUMSTOFFS MIT MAGNETITPARTIKELN ALS STRESS- UND SCHMERZLINDERNDES MATERIAL
PROCÉDÉS DE PRODUCTION DE MOUSSE DE POLYURÉTHANE SOUPLE CONTINUE EN FEUILLE COMPRENANT DES PARTICULES DE MAGNÉTITE EN GUISE DE MATÉRIAU DE RÉDUCTION DU STRESS ET DES DOULEURS

(30) Priority: 08.03.2019 TR 201903564
(43) Date of publication of application: 21.07.2021
(73) Proprietor: SAFAS SAF PLASTIK SANAYI VE TICARET ANONIM SIRKETI, 34893 Pendik Istanbul (TR)
(72) Inventor: EROGLU, Gulden, 41400 Kocaeli (TR); TEMIZKAN, Emir, 41400 Kocaeli (TR); DELIGOZ, Huseyin, 41400 Kocaeli (TR)
(74) Representative: JD&P Patent Attorneys Joanna Dargiewicz & Partners
(86) International application number: PCT/TR2019/050226
(87) International publication number: WO 2020/185173

(56) References cited:
- WO-A1-2013/151410
- WO-A1-2013/151410
- CN-A- 105 566 603
- CN-A- 105 566 603
- MIR MOHAMMAD ALAVI NIKJE ET AL: "Investigation of Fe3O4/AEAP supermagnetic nanoparticles on the morphological, thermal and magnetite behavior of polyurethane rigid foam nanocomposites", POLIMERY, vol. 60, no. 01, 1 January 2015 (2015-01-01), PL, pages 26 - 32, XP055687520, ISSN: 0032-2725, DOI: 10.14314/polimery.2015.026

## Description

### Field of Invention

The present invention relates to the acquisition of composite material showing magnetic properties by addition of magnetite particles (1) into the slabstock flexible polyurethane foam (2) during production or by coating (4) magnetite particles (1) onto the upper surface of the flexible polyurethane foam (2) with the help of a binder (3) in order to remove mechanical pain and reduce stress in the body.

### Background of The Invention

The production of flexible polyurethane foam is done in a batch molded form or continuous slabs are used as either a carrier or tunnel. These two methods are very different from each other and there are various patents related to this subject. In the patent US005582840A and US007101163B2, the production of continuous slabstock flexible polyurethane foam is described in detail. In continuous slabstock polyurethane foam production, there is a tunnel, a conveyor in the tunnel, a mixing head and a line (piping) and a pump for discharging the reaction mixture from the mixing head to the conveyor. When the foam is discharged into the hopper, the conveyor in the tunnel starts to move and the material flows over the conveyor, thus it is provided to rise and cure. As the first curing is completed after about 20 m, the blocks are cut at certain dimensions and taken aside, and the continuity of production is ensured.

US005302326A is about the production of a batch-molded flexible polyurethane. Mold release agent is applied to the inner surface of the mold before production. The mold is heated to 60* C. The use of the release agent applied to the mold is to prevent the adhesion of the flexible polyurethane foam. The polyurethane foam is injected into the mold. After the hardening step, the desired molded flexible polyurethane foam is removed from the mold.

However, the present invention is about the addition of produced as a suspension of magnetite particles (1) in polyol or mixture of natural magnetite particles (1) and polyol into the continuous slabstock flexible polyurethane foam (2) during production or with the addition of natural magnetite particles (1) or mixed with magnetite particles (1) or coating (4) of the magnetite particles (1) by means of a binder (3) onto the upper surface of the slabstock flexible polyurethane foam (2) after its production.

There are some patents related to an achievement of certain features to the polyurethane foam product using a number of particles such as silver, copper, iron, nickel, calcite, activated carbon etc. addition of during the production of flexible polyurethane foam. In the patent US20090189111A1, polymer matrix was made by addition of nano fillers into the polymer for isolation of the sound. This polymer matrix can also be open-cell flexible polyurethane foam. In US20120249375A1, magnetic material is added to the thermoplastic or thermoset polymer to provide electrical permeability. US20150274924A1 relates to an insulating polyurethane foam having a coating comprising materials such as carbon nanotube or graphene, to increase the conductivity of the polyurethane foam and to use these products for the production of antistatic products.

In US20160311139A1, polyurethane foam having high absorption capacity and modified toxicity level was obtained by adding copper nanoparticles to provide antibacterial property. WO2014/147638A1 discloses a matrix which provides a curative effect by coating the chitosan with silver nanoparticles embedded in on the cotton fabric. US4438156 discloses the use of magnetic particles in the organic polymer by means of a binder material for using magnetic recording. Furthermore, the present invention proposes to add magnetite particles (1) into the continuous slabstock polyurethane foam (2) during the production or to coat (4) the magnetite particles (1) with a binder (3) onto the upper surface of the slabstock flexible polyurethane foam (2) after the production.

Different production techniques of magnetite particles that are using number of polymeric materials and give certain properties to the system are described in the patents. In the EP1266385B1, porous ferro or ferrimagnetic particles were obtained by the addition of iron oxide particles and tetraethoxysilane solution in a mixture of ammonium chloride buffer solution (pH 11) and ethanol for use as the isolation molecule. In the patent US005093100A, after the reaction of iron (III) oxide, iron (II) sulphate and sodium hydroxide at 220 C. for 2 hours, black precipitate was filtered to room temperature, washed with water and dried, and after this operation 0.5-2.0 microns Magnetite particles were obtained. In the patent US005240628A, pH of a mixture of iron (III) chloride and iron (II) chloride was adjusted to 11 with the addition of sodium hydroxide until the pH was 11 and after the reaction at 80 "C and 2 hours system started to cool down and separation of the salts was done by decantation and after the operation 30 % magnetite suspension was obtained. The N-polyalkyleneepolyamine-substituted alkenylsuccinate in the hydrocarbon solvent is added to this suspension and the resulting water and hydrocarbon solvent in the emulsion are removed by under-pressurization at 50° C and the N-polyalkyleneepolyamine-substituted alkenylsuccinate adsorbed magnetite particles are washed and dried and added to the oil. The magnetic liquid is obtained after the ultrasonic mixing. In US005733471A, US006767529B2, US006849196B2 and US006013193A, iron (II) sulfate was mixed with sodium silicate and sodium hydroxide was added for pH adjustment. The air is blown into the heated mixture to provide oxidation. After the oxidation reaction was completed, magnetite particles were obtained after filtration, washing, drying and grinding. However, the present invention proposes to use natural magnetite particles (1) or magnetite particles (1) produced in polyol, in flexible polyurethane foam (2).

Magnetite particles obtained as a result of the reactions of certain chemicals are also found naturally in certain parts of the world. Sand on the coast of Turkey, Ordu contain high amounts of magnetite particles. It has been known for many years that the sand on the beach is a source of healing and that it is good for diseases such as rheumatism and psoriasis and mechanical pain that occurs in the body (such as waist and back pains) and that it reduces the stress by balancing the energy in the body. When the reason of this healing power in the sand were investigated, it was found that the reasons is naturally occurring magnetite particles in it.

It is known that the Earth is also a magnet and has an average magnetic field of 0.5 gauss. In addition, many studies have been carried out on the positive effects of the magnetic field. And nowadays, magnetic field therapy is used with electromagnetic field devices, in the fields of orthopedics, rehabilitation, urogenital disorders and sports health; in the elimination of acute and chronic pain in the shoulder, back, elbow and waist regions, in the elimination of joint congestion, in accelerating the recovery time of the fractures and in the improvement of rheumatism and many other disorders.

In EP2343998A1 patent, some recommendations are based on the elastic magnetic stripes directed to the north pole and the south pole in the same direction. These elastic magnetic strips have been used to improve metabolism, accelerate blood circulation, regulate the energy balance in the body and reduce the effect of stress. However, the present invention proposes the use of magnetite particles (1) instead of magnetic strips. In the patent US2010011616A1, the two magnetic elements are separated by foam rubber. Mentioned magnetic elements are in such a way that they are facing the same poles with which they meet the same polarity, thus providing magnetic push cushioning between the magnetic elements. Similarly, WO2007037581A1, GR1005149B2, KR20020090965A and KR20030031505A are publications containing magnet plates. However, the present invention relates to the use of magnetite particles (1) on or within the flexible polyurethane foam (2). In the patent no. KR20090103225A, a certain amount of magnetite particles is added to the resin mixture and mentions the toilet health agent. However, the present invention relates to the use of magnetite powder (1) in the flexible polyurethane foam (2). The patent WO2013/151410A1 relates to a magnetic polyurethane composition having magnetic properties, which provides a constant magnetic field similar to that produced by the human body and which can be used to simulate the nervous system. The product mentioned in the patent assists in blood circulation by providing nerve conduction. After obtaining a homogeneous mixture from the polyurethane with magnetite particles, the mixture was obtained by injecting the mixture into a certain temperature mold. Of course, this patent incorporating the magnetite powder composition is the most similar to the present invention proposal. However, the flexible polyurethane used in the present invention is produced by continuous slabstock instead of batch-molded operation. One block produced in 30-40 m3 volume 15- 20 m length is cut to desired dimensions after curing and final product is obtained. Furthermore, apart from the systematic difference between these two systems, the toluene diisocyanate (TDI) was used as an isocyanate in the present invention instead of methylene diphenyl diisocyanate (MDI).

### Summary of The Invention

The object of the present invention is produce material to reduce the mechanical pain and stress in the body by adding natural magnetite particles or produced magnetite particles in polyol to the continuous slabstock flexible polyurethane foam during production or by coating (4) the magnetite particles (1) with a binder (3) onto the upper surface of the slabstock flexible polyurethane foam (2) after the production. The present invention will be used in mat, pad, mattress equipment (pillow, mattress) and such materials. Previously, some textile products were produced with using ribbon magnets as a pain relief material, but to date, the use of magnetite particles has not been used in the production of continuous slabstock flexible polyurethane foam. By using magnetite particles in the continuous slabstock flexible polyurethane foam used in the mattress or bedding, the body will be able to remove the pain and decrease the stress. And these beds can be used in the treatment of pain in hospitals, rehabilitation and physical therapy centers.

### Brief Description of Drawings

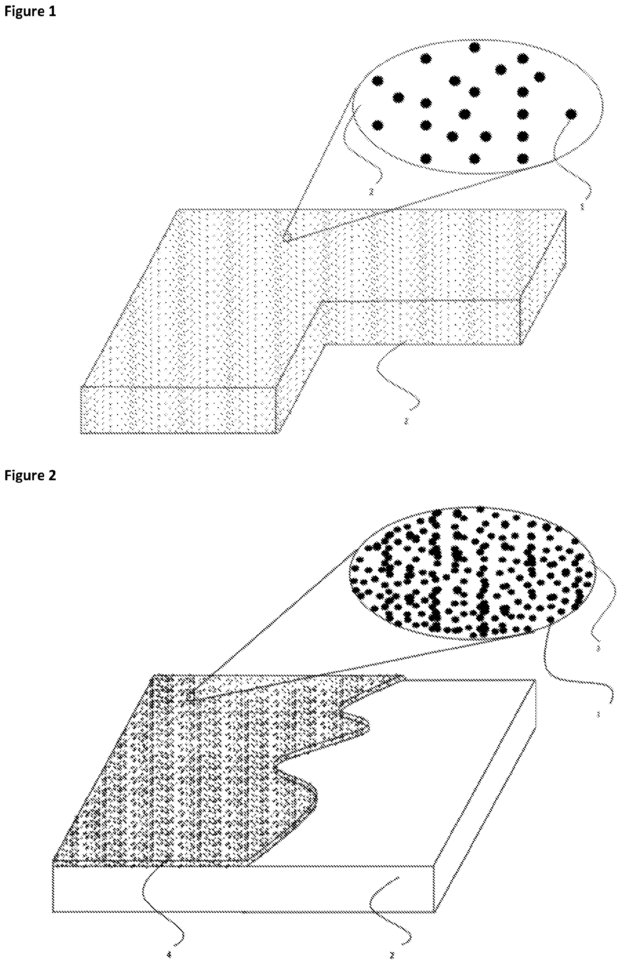

Figure 1. Composite material obtained by dispersing the magnetite particles (1) homogenously in a flexible polyurethane foam (2)
Figure 2. Composite material formed by coating (4) of magnetite particles (1) by means of a binder (3) onto the upper part of the flexible polyurethane foam (2)

### Description of The References in The Drawings

1. Magnetite
2. Flexible polyurethane foam
3. Binder
4. Coating

### Detailed Description of The Invention

Starting from publications describing the benefits of magnetic field, the present invention is achieved from natural magnetite particles (1) on the coast of Turkey, Ordu or produced magnetite particles (1) in polyol by incorporating into continuous slabstock polyurethane foam (2) during the production or by applying as coating (4) by means of the binder (3); used in the production of mattress products (such as mattress and pillow), mat, pad and insoles. The magnetic hysteresis (VSM) curve of the natural magnetite powders and the magnetite powders produced in the polyol were drawn from the measurements and -50 - +50 and - 27 - +27 Tesla results were obtained respectively, made by using the Cryogenic Limited PPMS device in the Electrical, Magnetic and Optical Properties Laboratory (EMOL) at the METU Central Laboratory R&D Training and Measurement Center. In the laboratory measurements, the magnetic field of the flexible polyurethane foam containing the magnetite particles (1) was found to be in the range of 0.7-1.1 gauss.

The object of the present invention is to produce flexible polyurethane foam containing magnetite particle (1) to reduce pain and stress in the body. Our product is a new product because it has not previously been used the magnetite particles in or on to the surface of the continuous slabstock flexible polyurethane foam (2) in order to reduce pain and reduce stress. The invention concerns with a method for producing continuous slabstock flexible polyurethane foam including magnetite particles according to the appended claims. The invention also concerns with a flexible polyurethane foam (2) containing magnetite particles (1) or a coating (4) containing magnetite particles (1) applied with a binder (3) onto the upper part of the flexible polyurethane foam (2), prepared according to the method according to the appended claims.

In order to obtain the material produced in two different ways, the following operations were performed respectively.

### 1- MAGNETITE PRODUCTION

### 1-1- Separation of Natural Magnetite Particles (1) from Sand

Sand with high moisture content containing magnetite particles is placed inside the front open steel cylinder rotating on its axis and dried with hot air blowing from the front. The dried magnetite particles were separated from the sand by means of magnets.

### 1-2- Magnetite (1) Production in Polyol

Iron (III) oxide, iron (II) sulfate heptahydrate and water solution heated to 60-90 ° C and pH of the solution was adjusted to 11 with the help of an alkaline media. The reaction was carried out for 1 to 5 hours. The filtered material was washed with water to remove salts and alkali media. Polyether polyol was added to the obtained particles and the system was heated to 90-110 ° C and water was removed by means of vacuum.

### 2- PRODUCING FLEXIBLE POLYURETHANE FOAM (2) INCLUDING MAGNETITE PARTICLES (1):

Polyurethane foam (2) including magnetite particles (1) is produced by two different methods. The operations are described below.

### 2-1- Magnetite particles using into continuous slabstock flexible polyurethane foam (2)

### 2-1-a Flexible polyurethane foam (2) production with natural magnetite particles (1)

The magnetite (1) separated from the sand is mixed with the polyol before adding it to the system. The mixture of polyol and magnetite (1), water, reaction catalyst (tinned compounds), foaming catalysts (amines), foaming agent (methylene chloride), surfactant (silicon compounds) and TDI are pumped to the mixer head. Mix the mixture for 1-2 seconds with the high-speed mixer. The material overflowing from the hopper rises on the moving conveyor in the tunnel and the polyurethane foam (2) is formed after the gas outlet. The blocks cut to certain lengths (18-20 m) are kept for one day and then cut to the desired dimensions.

### 2-1-b Flexible polyurethane foam (2) production with magnetite particles (1) produced in polyol

Magnetite particles (1) that produced in polyol, water, reaction catalyst (tinned compounds), foaming catalysts (amines), foaming agent (methylene chloride), surfactant (silicone compounds) and TDI are pumped to the mixer head. Mix the mixture for 1-2 seconds with the high-speed mixer. The material overflowing from the hopper rises on the moving conveyor in the tunnel and the polyurethane foam (2) is formed after the gas outlet. The blocks cut to certain lengths (18-20 m) are kept for one day and then cut to the desired dimensions.

### 2-2- Coating (4) application of the magnetite particles (1) onto the upper part of the continuous slabstock flexible polyurethane foam (2) by means of binder (3)

Polyurethane-based binder (3), solvent and natural magnetite particles (1) separated from sand are mixed in a chamber and sprayed with a pistol to form a 1 mm thick coating (4) on a flexible polyurethane foam (2). The solvent contained in the coating (4) which has been removed on the coated flexible polyurethane foam (2) by the help of heat.

### Industrial Applicability

Everything described in the disclosure section of the invention is the same as the way it is applied to industry. The mentioned material that is flexible polyurethane foam (2) including the magnetite (1) described above is produced in the above-mentioned forms within the company. All applications for the production of flexible polyurethane foam (2) including magnetite (1) are made in the company and presented to the customer as the final product.

### Examples

### Used Chemicals

Triol A - EO (ethylene oxide) capped PO (propylene oxide) based polyether polyol having 3500 Dalton molecular weight
Triol B - Polyether polyol having 700 Dalton molecular weight with 250 mg KOH/g hydroxyl value
Triol C- PO (propylene oxide) based polyether polyol containing 20-25 wt% styrene acrylonitrile (SAN) polymer particles
Triol D - Polyether polyol having 5000 Dalton molecular weight of containing 75% EO (ethylene oxide)
Triol E - Polyether polyol having 5000 Dalton molecular weight of containing 20-25 wt% polymeric particles
Triol F - PO (propylene oxide) based polyether polyol containing 40-50 wt% styrene acrylonitrile (SAN) polymer particles
High Functional Polyol - Sorbitol initiated polyether polyol having >6000 Dalton molecular weight with six functional groups TDI - 80:202,4: 2,6 toluene diisocyanate Methylene Chlorite
Water
Dabco T9 - Tin catalyst
Dabco BL11 - 70% bis (dimethyl amino ethyl) ether diluted in 30% propylene glycol
Dabco 33 LV - 33% triethylene diamine 67% dipropylene glycol solution
33% urea solution
DEOA 85 - 85% diethanol amine in water
TEOA - triethanol amine
DIPA - diisopropanol amine
Polyether modified polysiloxane
Natural Magnetite particles
Magnetite particles produced in polyol

### Example 1: Magnetite (1) Production in Polyol

The system contains 3 neck Glass flask, temperature controller and mechanical mixer. 30 g of iron (III) oxide, 50 g of iron (II) sulfate heptahydrate and 700 g of water are added into a 3-neck glass flask. With the help of mechanical mixer, the media in the flask is heated to 70 ° C. Add 25% ammonia solution (30- 50 g) till pH 11 at 70 ° C. After 4 hours, the reaction temperature is cooled to room temperature and the particles are then filtered. After filtration, the remaining material is washed with water in order to remove the salts and alkaline media. 100 g polyether polyol is added to the obtained ~40 g particles and heated to 110 ° C under vacuum to remove the water. The resulting material is used in the production of flexible polyurethane foam.

### Polyol mixture ratios used in flexible polyurethane foam production

Polyether polyol ratios in magnetite used in foam recipes are as follows.
Standard flexible polyurethane foam: 100% Triol A or 80-90% Triol A and 10-20% Triol C mixture Flexible polyurethane foam with memory (viscoelastic): 10-15% Triol A, 55-70% Triol B, 10-15% Triol C and 7-12% Triol D mixture
Flexible polyurethane foam with high elasticity: 10-15% Triol E, 7-15% Triol F and 65-80% high-functional polyether polyol mixture

### Example 2: Production of flexible polyurethane foam (2) including natural magnetite particles (1)

A suspension is obtained addition of 100 g of polyether polyol in 40 g of magnetite particles. The chemicals in Table 1. are pumped into the mixer head. Mix the mixture for 1-2 seconds with the high-speed mixer. A flexible polyurethane foam with a standard or high elasticity polyurethane foam with an index of 100- 110 and a memory foam with an index of 80-95 are obtained.

**Table 1. Flexible polyurethane foam recepi 1**

| ***Chemicals*** | ***wt %*** |
|---|---|
| Natural magnetite + polyether polyol | 70-80 |
| Methylene chlorite | 0-5 |
| Water | 1-3 |
| Dabco T9 | 0,1-0,5 |
| Dabco BL11 | 0,001-0,005 |
| Dabco 33LV | 0,002-0,02 |
| 33 % urea solution | 0-0,1 |
| DEOA 85 | 0-0,1 |
| TEOA | 0-0,1 |
| DIPA | 0-0,1 |
| Polyether modified polysiloxane | 0,3-0,8 |
| TDI | 15-25 |

### Example 3: Production of flexible polyurethane foam (2) including magnetite particles (1) produced in polyol

The chemicals in Table 2. are pumped into the mixer head. Mix the mixture for 1-2 seconds with the highspeed mixer. A flexible polyurethane foam with a standard or high elasticity polyurethane foam with an index of 105-115 and a memory foam with 85-95 index are obtained.

**Table 2. Flexible polyurethane foam recepi 2**

| ***Chemicals*** | ***wt %*** |
|---|---|
| Magnetite particles produced in polyol | 67-78 |
| Methylene chlorite | 0-5 |
| Water | 1-3 |
| Dabco T9 | 0,2-1,0 |
| Dabco BL11 | 0,002-0,01 |
| Dabco 33LV | 0,004-0,04 |
| 33 % urea solution | 0-0,1 |
| DEOA 85 | 0-0,1 |
| TEOA | 0-0,1 |
| DIPA | 0-0,1 |
| Polyether modified polysiloxane | 0,5-1,0 |
| TDI | 18-27 |

### Example 4: Coating (4) application of the magnetite particles (1) onto the upper part of the continuous slabstock flexible polyurethane foam (2) by means of binder (3)

The materials are mixed in a chamber and sprayed with a pistol to form a 1 mm thick coating (4) on a flexible polyurethane foam. The composite material obtained at the end of solvent vaporization consists of 30-40 wt% magnetite particles (1), 45-60 wt% continuous slabstock flexible polyurethane foam (2), 7-15 wt% polyurethane based binder (3).

**Table 3. Coating material recipe**

| ***Chemicals*** | ***wt %*** |
|---|---|
| Magnetite particles | 45-55 |
| Methylene Chlorite | 20-40 |
| Polyurethane based binder | 12-18 |

## Claims

1. A method for producing continuous slabstock flexible polyurethane foam including magnetite particles as a stress and pain reducing material, comprising the steps of
- producing magnetite particles (1):
a) separation of natural magnetite particles (1) from sand comprising placing sand containing magnetite particles inside the front open steel cylinder rotating on its axis and drying with hot air blowing from the front, separating the dried magnetite particles from the sand by means of magnets,
or
b) magnetite (1) production in polyol comprising heating iron (III) oxide, iron (II) sulfate heptahydrate and water solution to 60-90°C and adjusting pH of the solution to 11 using an alkaline media, carrying out the reaction for 1 to 5 hours, washing the filtered material with water to remove salts and alkali media, adding polyether polyol to the obtained particles and heating the system to 90-110°C and removing water by means of vacuum;
- producing flexible polyurethane foam (2) including natural magnetite particles (1):
a) mixing the magnetite particles (1) separated from the sand and polyol, pumping the mixture of polyol and the magnetite particles (1) , water, tinned compounds as reaction catalyst, amines as foaming catalysts, methylene chloride as foaming agent, silicon compounds as surfactant and toluene diisocyanate TDI to a mixer head;
b) mixing the pumped mixture for 1 to 2 seconds with a high-speed mixer; and
c) allowing the mixed pumped mixture overflowing from a hopper to rise on a moving conveyor in a tunnel, wherein the polyurethane foam is formed after a gas outlet, keeping the blocks cut to certain lengths (18-20 m) for one day and then cutting them to the desired dimensions,
or
- producing flexible polyurethane foam (2) with magnetite particles (1) produced in polyol
a) pumping magnetite particles (1) that produced in polyol, water, tinned compounds as reaction catalyst, amines as foaming catalysts, methylene chloride as foaming agent, silicon compounds as surfactant and toluene diisocyanate TDI to the mixer head
b) mixing the pumped mixture for 1 to 2 seconds with a high-speed mixer; and
c) allowing the mixed pumped mixture overflowing from a hopper to rise on a moving conveyor in a tunnel, wherein the flexible polyurethane foam is formed after a gas outlet, keeping the blocks cut to certain lengths (18-20 m) for one day and then cutting them to the desired dimensions.

2. The method according to claim 1, wherein the step of separating further comprises magnetically separating the magnetite particles from the sand, and wherein the step of mixing the separated natural magnetite particles with polyol results in a solution comprising 25-40 wt% natural magnetite (1) and 60-75 wt% polyether polyol.

3. The method according to claim 2, **characterized in that** it the flexible polyurethane foam comprises the following chemical composition: 70-80 wt% natural magnetite particles suspended in polyol (1) 0-5 wt% methylene chloride, 1-3 wt% water, 0.1-0.5 wt% tin catalyst, 0.001-0.005 wt% 70% bis (dimethyl amino ethyl) ether diluted in 30% propylene glycol, 0.002-0.02 wt% 33% triethylene diamine 67% dipropylene glycol solution, 0-0.1 wt% 33% urea solution, 0-0.1 wt% 85% diethanol amine in water, 00.1 wt% triethanol amine, 0-0.1 wt% diisopropanol amine, 0.3-0.8 wt% polyether modified polysiloxane, 15-25 wt% 80:20 2,4: 2,6 toluene diisocyanate.

4. The method according to claim 1, **characterized in that** in case of producing magnetite particles (1) in polyol, the flexible polyurethane foam has the following chemical composition: 0-5 wt% methylene chlorite, 1-3 wt% water, 0.2-1.0 wt% tin catalyst, 0.002-0.01 wt% 30% propylene glycol 70% bis (dimethyl amino ethyl) ether diluted, 0.004-0,04 wt% 33% triethylene diamine 67% dipropylene glycol solution, 0-0.1 wt% 33% urea solution, 0-0.1 wt% 85% diethanol amine in water, 0-0.1 wt% triethanol amine, 0-0.1 wt% diisopropanol amine, 0.5-1.0 wt% polyether modified polysiloxane, 18-28 wt% 80:20 2,4: 2,6 toluene diisocyanate.

5. A method for producing continuous slabstock flexible polyurethane foam including magnetite particles as a stress and pain reducing material, comprising the steps of
- producing magnetite particles (1):
a) separation of natural magnetite particles (1) from sand comprising placing sand containing magnetite particles inside the front open steel cylinder rotating on its axis and drying with hot air blowing from the front, separating the dried magnetite particles from the sand by means of magnets, mixing the obtained magnetite (1) with the polyol, or
b) magnetite (1) production in polyol comprising heating iron (III) oxide, iron (II) sulfate heptahydrate and water solution to 60-90°C and adjusting pH of the solution to 11 using an alkaline media, carrying out the reaction for 1 to 5 hours, washing the filtered material with water to remove salts and alkali media, adding polyether polyol to the obtained particles and heating the system to 90-110°C and removing water by means of vacuum;
- producing flexible polyurethane foam (2) including magnetite particles (1):
a) mixing the separated magnetite particles, a polyurethane-based binder (3) and solvent in a chamber and
b) spraying the mixture with a pistol to form a 1 mm thick coating (4) on the flexible polyurethane foam, removing the solvent contained in the coating (4) on the coated flexible polyurethane foam (2) by heating.

6. The method according to claim 5, wherein a composite material obtained by the method comprises the following chemical composition: 30-40 wt% magnetite particles (1), 45-60 wt% continuous slabstock flexible polyurethane foam (2), 7-15 wt% polyurethane based binder (3).

7. The method according to claim 5, wherein the coating (4) comprises 45-55 wt% magnetite particles (1), 20-40 wt% solvent and 12- 18 wt% polyurethane-based binder (3).

8. A flexible polyurethane foam (2) comprising magnetite particles produced according to the method of any of claims 1 to 7.

## Patentansprüche

1. Ein verfahren zur Herstellung von flexiblem Polyurethan-Endlosschaum, der Magnetitpartikel als spannungs- und schmerzreduzierendes Material enthält, umfassend die folgenden Schritte
- Herstellung von Magnetitpartikeln (1):
a) Abtrennung natürlicher Magnetitpartikel (1) von Sand, wobei Sand, der Magnetitpartikel enthält, in den vorderen offenen Stahlzylinder, der sich um seine Achse dreht, eingebracht und mit von vorne eingeblasener Heißluft getrocknet wird, und die getrockneten Magnetitpartikel mit Hilfe von Magneten vom Sand getrennt werden,
oder
b) Herstellung von Magnetit (1) in Polyol durch Erhitzen einer Lösung aus Eisen(III)-oxid, Eisen(II)-sulfat-Heptahydrat und Wasser auf 60-90°C und Einstellen des pH-Wertes der Lösung auf 11 unter Verwendung eines alkalischen Mediums, Durchführen der Reaktion für 1 bis 5 Stunden, Waschen des gefilterten Materials mit Wasser, um Salze und alkalische Medien zu entfernen, Hinzufügen von Polyetherpolyol zu den erhaltenen Teilchen und Erhitzen des Systems auf 90-110°C und Entfernen des Wassers mittels Vakuum;
- Herstellung eines flexiblen Polyurethanschaums (2), der natürliche Magnetitteilchen (1) enthält:
a) Mischen der vom Sand abgetrennten Magnetitpartikel (1) und des Polyols, Pumpen des Gemischs aus Polyol und den Magnetitpartikeln (1), Wasser, Zinnverbindungen als Reaktionskatalysator, Aminen als Schaumkatalysatoren, Methylenchlorid als Schaumbildner, Siliciumverbindungen als Tensid und Toluoldiisocyanat TDI in einen Mischkopf;
b) Mischen des gepumpten Gemischs für 1 bis 2 Sekunden mit einem Hochgeschwindigkeitsmischer; und
c) das gemischte gepumpte Gemisch, das aus einem Trichter überläuft, auf einem sich bewegenden Förderer in einem Tunnel aufsteigen zu lassen, wobei der Polyurethanschaum nach einem Gasauslass geformt wird, die auf bestimmte Längen (18-20 m) geschnittenen Blöcke einen Tag lang aufzubewahren und sie dann auf die gewünschten Abmessungen zu schneiden,
oder
- Herstellung von Polyurethan-Weichschaum (2) mit in Polyol hergestellten Magnetitpartikeln (1)
a) Pumpen von in Polyol hergestellten Magnetitpartikeln (1), Wasser, Zinnverbindungen als Reaktionskatalysator, Aminen als Schaumkatalysatoren, Methylenchlorid als Schaumbildner, Siliziumverbindungen als Tensid und Toluoldiisocyanat TDI in den Mischkopf
b) Mischen des gepumpten Gemischs für 1 bis 2 Sekunden mit einem Hochgeschwindigkeitsmischer; und
c) das gemischte gepumpte Gemisch, das aus einem Trichter überläuft, auf einem sich bewegenden Förderer in einem Tunnel aufsteigen zu lassen, wobei der flexible Polyurethanschaum nach einem Gasauslass geformt wird, wobei die auf bestimmte Längen (18-20 m) geschnittenen Blöcke einen Tag lang aufbewahrt und dann auf die gewünschten Abmessungen geschnitten werden.

2. Verfahren nach Anspruch 1, wobei der Schritt des Trennens ferner das magnetische Trennen der Magnetitteilchen vom Sand umfasst und wobei der Schritt des Mischens der abgetrennten natürlichen Magnetitteilchen mit Polyol zu einer Lösung führt, die 25-40 Gew.- % natürlichen Magnetit (1) und 60-75 Gew.-% Polyetherpolyol umfasst.

3. Verfahren nach Anspruch 2, **dadurch gekennzeichnet, dass** der Polyurethan-Weichschaum die folgende chemische Zusammensetzung aufweist: 70-80 Gew.-% natürliche Magnetitteilchen, suspendiert in Polyol (1), 0-5 Gew.-% Methylenchlorid, 1-3 Gew.-% Wasser, 0,1-0,5 Gew.-% Zinnkatalysator, 0,001-0,005 Gew.-% 70% Bis(dimethylaminoethyl)ether, verdünnt in 30% Propylenglykol, 0,002-0. 02 Gew.-% 33% Triethylendiamin 67% Dipropylenglykollösung, 0-0,1 Gew.-% 33% Harnstofflösung, 0-0,1 Gew.-% 85% Diethanolamin in Wasser, 00,1 Gew.-% Triethanolamin, 0-0,1 Gew.-% Diisopropanolamin, 0,3-0,8 Gew.-% polyethermodifiziertes Polysiloxan, 15-25 Gew.-% 80:20 2,4: 2,6-Toluoldiisocyanat.

4. Verfahren nach Anspruch 1, **dadurch gekennzeichnet, dass** im Falle der Herstellung von Magnetitpartikeln (1) in Polyol der Polyurethan-Weichschaum die folgende chemische Zusammensetzung aufweist: 0-5 Gew.-% Methylenchlorit, 1-3 Gew.-% Wasser, 0,2-1,0 Gew.-% Zinnkatalysator, 0,002-0,01 Gew.-% 30% Propylenglykol 70% Bis(dimethylaminoethyl)ether verdünnt, 0,004-0,04 Gew.-% 33% Triethylendiamin 67% Dipropylenglykol-Lösung, 0-0. 1 Gew.-% 33% Harnstofflösung, 0-0,1 Gew.-% 85% Diethanolamin in Wasser, 0-0,1 Gew.-% Triethanolamin, 0-0,1 Gew.-% Diisopropanolamin, 0,5-1,0 Gew.-% polyethermodifiziertes Polysiloxan, 18-28 Gew.-% 80:20 2,4: 2,6-Toluoldiisocyanat.

5. Verfahren zur Herstellung von flexiblem Polyurethan-Endlosschaum, der Magnetitteilchen als spannungs- und schmerzreduzierendes Material enthält, umfassend die folgenden Schritte
- Herstellung von Magnetitpartikeln (1):
a) Abtrennung natürlicher Magnetitpartikel (1) von Sand, wobei der Sand, der Magnetitpartikel enthält, in den vorderen offenen Stahlzylinder, der sich um seine Achse dreht, eingebracht und mit von vorne eingeblasener Heißluft getrocknet wird, die getrockneten Magnetitpartikel mit Hilfe von Magneten vom Sand getrennt werden und der erhaltene Magnetit (1) mit dem Polyol gemischt wird, oder
b) Herstellung von Magnetit (1) in Polyol durch Erhitzen einer Lösung aus Eisen(III)-oxid, Eisen(II)-sulfat-Heptahydrat und Wasser auf 60-90°C und Einstellen des pH-Werts der Lösung auf 11 unter Verwendung eines alkalischen Mediums, Durchführen der Reaktion für 1 bis 5 Stunden, Waschen des gefilterten Materials mit Wasser, um Salze und alkalische Medien zu entfernen, Zugeben von Polyetherpolyol zu den erhaltenen Teilchen und Erhitzen des Systems auf 90-110°C und Entfernen von Wasser mittels Vakuum;
- Herstellung von Polyurethan-Weichschaum (2) mit Magnetitpartikeln (1):
a) Mischen der abgetrennten Magnetitteilchen, eines Bindemittels auf Polyurethanbasis (3) und eines Lösungsmittels in einer Kammer und
b) Sprühen der Mischung mit einer Pistole, um eine 1 mm dicke Beschichtung (4) auf dem Polyurethan-Weichschaum zu bilden, Entfernen des in der Beschichtung (4) enthaltenen Lösungsmittels auf dem beschichteten Polyurethan-Weichschaum (2) durch Erhitzen.

6. Verfahren nach Anspruch 5, wobei ein durch das Verfahren erhaltenes Verbundmaterial die folgende chemische Zusammensetzung aufweist: 30-40 Gew.-% Magnetitpartikel (1), 45-60 Gew.-% kontinuierlicher Polyurethan-Weichschaumstoff (2), 7-15 Gew.-% Bindemittel auf Polyurethanbasis (3).

7. Verfahren nach Anspruch 5, wobei die Beschichtung (4) 45-55 Gew.-% Magnetitpartikel (1), 20-40 Gew.-% Lösungsmittel und 12-18 Gew.-% Bindemittel auf Polyurethanbasis (3) umfasst.

8. Polyurethan-Weichschaum (2), der Magnetitteilchen enthält, die nach dem Verfahren eines der Ansprüche 1 bis 7 hergestellt wurden.

## Revendications

1. Une méthode de production de mousse slabstock de polyuréthane souple continue, incluant des particules de magnétite en tant que matériau de réduction du stress et de la douleur, comprenant les étapes de
- production des particules de magnétite (1) :
a) séparer les particules de magnétite naturelles (1) du sable, comprenant le placement du sable contenant des particules de magnétite à l'intérieur du cylindre en acier ouvert à l'avant, tournant sur son axe et séchant avec de l'air chaud soufflé par l'avant
ou
b) production de magnétite (1) dans du polyol, comprenant le chauffage d'oxyde de fer (III), du sulfate de fer (II), heptahydraté et d'une solution d'eau à 60-90 °C et l'ajustement du pH de solution à 11 à l'aide d'un milieu alcalin, en réalisant la réaction pendant 1 à 5 heures, en lavant le matériau filtré avec l'eau pour éliminer les sels et le milieu alcalin, en ajoutant du polyéther polyol aux particules obtenues et en chauffant le système à 90-110 °C tout en éliminant l'eau par moyens de vide ;
- production de mousse de polyuréthane flexible (2) incluant des particules de magnétite naturelle (1) :
a) mélanger les particules de magnétite (1) séparées du sable et du polyol, pomper du mélange de polyol et des particules de magnétite (1), d'eau, de composés en boite comme catalyseurs de réaction,
d'amines comme catalyseurs de moussage, de dichlorométhane comme agent de moussage, de composées silicones comme tensioactifs et de diisocyanate de toluène vers une tête de mélangeur ;
b) mélanger du mélange pompé pendant 1 à 2 secondes avec un mélangeur à grande vitesse ; et
c) laisser le mélange pompé mélangé déborder d'un trémie et s'élever sur un convoyeur mobile dans un tunnel, où la mousse de polyuréthane se forme après une sortie de gaz, en gardant les blocs découpés à certaines longueurs (18 - 20 m) pendant un jour, puis en les découpant aux dimensions souhaitées,
ou
- production de mousse de polyuréthane flexible (2) avec des particules de magnétite (1) produites dans du polyol
a) pomper des particules de magnétite (1) produites dans du polyol, de l'eau, de composés en boite comme catalyseurs de réaction, d'amines comme catalyseurs de moussage, de dichlorométhane comme agent de moussage, de composées silicones comme tensioactifs et de diisocyanate de toluène vers une tête de mélangeur;
b) mélanger du mélange pompé pendant 1 à 2 secondes avec un mélangeur à grande vitesse ; et
c) laisser le mélange pompé mélangé déborder d'un trémie et s'élever sur un convoyeur mobile dans un tunnel, où la mousse de polyuréthane se forme après une sortie de gaz, en gardant les blocs découpés à certaines longueurs (18 - 20 m) pendant un jour, puis en les découpant aux dimensions souhaitées,

2. La méthode selon la revendication 1, dans lequel l'étape de séparation comprend en outre la séparation magnétique des particules de magnétite du sable, et dans lequel l'éTape de , mélange des particules de magnétite naturelle séparées avec du polyol aboutit à une solution comprenant 25-40 % en poids de magnétite naturelle (1) et 60-75 % en poids de polyéther polyol.

3. La méthode selon la revendication 2, **caractérisé en ce que** la mousse de polyuréthane flexible comprend la composition chimique suivante : 70-80 % en poids de particules de magnétite naturelle en suspension dans du polyol (1) 0-5 % en poids de dichlorométhane, 1-3 % en poids d'eau, 0,1-0,5 % en poids de catalyseur à base d'étain, 0,001-0,005 % en poids de 70 % de bis (diméthylamino éthyl) éther dilué dans 30 % de propylène glycol, 0,002-0,02 % en poids de solution de 33 % de triéthylènediamine et 67 % de glycol dipropylène, 0-0,1 % en poids de solution d'urée à 33 %, 0-0,1 % en poids de 85 % d'amines diéthanolamine dans l'eau, 00,1 % en poids de triéthanolamine, 0-0,1 % en poids d'amines diisopropanol, 0,3-0,8 % en poids de polysiloxane modifié par polyéther, 15-25 % en poids de diisocyanate de toluène 80:20 (2,4 : 2,6).

4. La méthode selon la revendication 1, **caractérisé en ce que**, dans le cas de la protection de particules de magnétite (1) dans du polyol, la mousse de polyuréthane flexible a la composition chimique suivante : 0-5 % en poids de dichlorométhane, 1-3 % en poids d'eau, 0,2-1,0 % en poids de catalyseur à base d'étain, 0,002-0,01 % en poids de 30 % de propylène glycol et de 70 % de bis (diméthylamino éthyl) éther dilué, 0,004-,0,04 % en poids de solution de 33 % de triéthylènediamine et de 67 % de glycol dipropylène, 0-0,1 % en poids de solution d'urée à 33 %, 0-0,1 % en poids de 85 % d'amines diéthanolamine dans l'eau, 0-0,1 % en poids de triéthanolamine, 0-0,1 % en poids d'amines diisopropanol, 0,5-1,0 % en poids de polysiloxane modifié par polyéther, 18-28 % en poids de diisocyanate de toluène 80:20 (2,4 : 2,6).

5. Une méthode de production de mousse slabstock de polyuréthane souple continue, incluant des particules de magnétite en tant que matériau de réduction du stress et de la douleur, comprenant les étapes de
- production des particules de magnétite (1) :
a) séparer les particules de magnétite naturelles (1) du sable, comprenant le placement du sable contenant des particules de magnétite à l'intérieur du cylindre en acier ouvert à l'avant, tournant sur son axe et séchant avec de l'air chaud soufflé par l'avant, séparant les particules de magnétite séchées du sable à l'aide d'aimants, en mélangeant la magnétite obtenu (1) avec le polyol, ou
b) production de magnétite (1) dans du polyol, comprenant le chauffage d'oxyde de fer (III), du sulfate de fer (II), heptahydraté et d'une solution d'eau à 60-90 °C et l'ajustement du pH de solution à 11 à l'aide d'un milieu alcalin, en réalisant la réaction pendant 1 à 5 heures, en lavant le matériau filtré avec l'eau pour éliminer les sels et le milieu alcalin, en ajoutant du polyéther polyol aux particules obtenues et en chauffant le système à 90-110 °C tout en éliminant l'eau par moyens de vide ;
- production de mousse de polyuréthane flexible (2) incluant des particules de magnétite naturelle (1) :
a) mélanger les particules de magnétite séparées, un liant à base de polyuréthane (3= et un solvant dans une chambre, et
b) pulvériser le mélange avec un pistolet pour former un revêtement de 1 mm d'épaisseur (4) sur la mousse de polyuréthane flexible, en éliminant le solvant contenu dans le revêtement (4) sur la mousse de polyuréthane flexible (2) par chauffage.

6. La méthode selon la revendication 5, dans lequel un matériau composite obtenu par la méthode comprend la composition chimique suivante : 30-40 % en poids de particules de magnétite (1), 45-60 % en poids de mousse de polyuréthane flexible continue en plaques (2), 7-15 % en poids de liant à base de polyuréthane (3).

7. La méthode selon la revendication 5, dans lequel le revêtement (4) comprend 45-55 % en poids de particules de magnétite (1), 20-40 % en poids de solvant et 12-18 % en poids de liant à base de polyuréthane (3).

8. Une mousse de polyuréthane flexible (2) comprenant des particules de magnétite produites selon la méthode de l'une des revendications 1 à 7.
